**Europäisches Patentamt**

(19) **European Patent Office**

**Office européen des brevets**

(11) Veröffentlichungsnummer: **0 036 186**
**B1**

(12) **EUROPÄISCHE PATENTSCHRIFT**

(45) Veröffentlichungstag der Patentschrift:
**11.01.84**

(21) Anmeldenummer: **81101838.1**

(22) Anmeldetag: **12.03.81**

(51) Int. Cl.³: **H 04 R 3/00,** H 04 R 17/00,
G 01 S 7/52, G 01 S 15/10,
B 06 B 1/06

(54) Verfahren zur Impulsanregung eines piezoelektrischen Schall-Sendewandlers.

(30) Priorität: **14.03.80 DE 3009975**

(43) Veröffentlichungstag der Anmeldung:
**23.09.81 Patentblatt 81/38**

(45) Bekanntmachung des Hinweises auf die Patenterteilung:
**11.01.84 Patentblatt 84/2**

(84) Benannte Vertragsstaaten:
**AT BE CH DE FR GB IT LI NL SE**

(56) Entgegenhaltungen:
**DE - B - 2 721 254**

(73) Patentinhaber: **SIEMENS AKTIENGESELLSCHAFT,
Berlin und München Wittelsbacherplatz 2,
D-8000 München 2 (DE)**

(72) Erfinder: **Kleinschmidt, Peter, Dipl.-Phys.,
Klagenfurterstrasse 12, D-8000 München 90 (DE)**

## Verfahren zur Impulsanregung eines piezoelektrischen Schall-Sendewandlers

Die vorliegende Erfindung bezieht sich auf ein Verfahren für einen piezoelektrischen Schallwandler zur impulsweisen Sendeanregung, wie dies im Oberbegriff des Patentanspruchs 1 bzw. 2 angegeben ist.

Aus dem Stand der Technik ist es bekannt, das Echo von einem Impulssignal für Entfernungsmessungen zu verwenden. Es werden dazu kurze Ultraschallimpulse ausgesendet und das Echosignal aufgenommen und ausgewertet (vgl. zum Beispiel die DE-B2-2 721 254). Die Entfernung eines den Ultraschall reflektierenden Objektes ergibt sich aus der Laufzeit der Ultraschallwellen dieses Impulses.

Bei kurzen Entfernungen, bei denen die Laufzeit nicht mehr um wenigstens eine Größenordnung größer als die Impulsdauer des Ultraschall-Sendesignals des piezoelektrischen Wandlers ist, ergeben sich Schwierigkeiten für eine genaue Bestimmung dieser Laufzeit, da der Einsatzzeitpunkt des Sendeschallimpulses nicht beliebig genau festzulegen ist.

Bislang wurde dieses Problem durch besondere Auswerteverfahren gelöst. Ist die Funktion des Anklingens des Ultraschall-Sendeimpulses bekannt, so kann durch mathematische Extrapolation der Hüllkurve des empfangenen Signals der Echobeginn nachträglich einigermaßen genau bestimmt werden. Dieses Verfahren einer Rückextrapolation setzt jedoch die Speicherung des Empfangssignals voraus und ist somit von vornherein aufwendig.

Es ist eine Aufgabe der vorliegenden Erfindung, für den Betrieb eines piezoelektrischen Ultraschallwandlers einen Sendewandler für insbesondere kurze Entfernungen ein solches Betriebsverfahren anzugeben, mit dem der Einsatzzeitpunkt des Sende-Schallimpulses in einfacher Weise genau festliegt.

Diese Aufgabe wird für ein Verfahren nach dem Oberbegriff des Patentanspruchs 1 bzw. 2 erfindungsgemäß mit den Merkmalen des Kennzeichens des Patentanspruchs 1 bzw. 2 gelöst. Ausgestaltungen und Weiterbildungen der Erfindung gehen aus den Unteransprüchen hervor.

Die Erfindung geht von dem Wissen aus, daß ein auf seiner Resonanzfrequenz betriebener Ultraschall-Wandler ohne Gefährdung seiner mechanischen Stabilität nur mit einer in der Amplitude begrenzten Wechselspannung betrieben werden darf. Beim Einschalten dieser Wechselspannung steigt die Schwingungsamplitude des Wandlers jedoch lediglich mit einer Zeitkonstanten $\Theta$, die entsprechend der Beziehung $\Theta = Q_m \cdot \tau$ von der Resonanzgüte $Q_m$ des Wandlers abhängt, worin $\tau$ die Periodendauer der nachfolgend anzuschaltenden Wechselspannung ist, von einem Anfangswert $A_1 = A_{max}/Q_m$ auf den Endwert $A_{max}$, der z. B. die maximal zulässige mechanische Amplitude des betreffenden Wandlers ist.

Der Erfindung liegt die Erkenntnis zugrunde, daß ein piezokeramischer Wandler, der bei Anregung in der Reihenresonanz ohne Gefährdung nur mit einer Wechselspannung mit einem Scheitelwert von höchstens $U_{max}$ betrieben werden darf, andererseits ohne Beschädigung mit einem einmaligen Spannungssprung, der ein Vielfaches des Scheitelwertes $U_{max}$ beträgt, angeregt werden darf. Die Spannung dieses Spannungssprunges darf dabei ohne weiteres so hoch gewählt werden, daß bereits mit dieser einmaligen elektrischen Anregung des Wandlers diejenige mechanische Auslenkungsamplitude $A_{max}$ erreicht wird, die gleich der maximal zulässigen mechanischen Schwingungsamplitude des Wandlers ist und in Resonanz bei Wechselspannungsanregung bzw. periodischer Impulsanregung mit einem Scheitelwert $U_{max}$ nach Ablauf des Einschwingvorgangs maximal erzeugt werden kann.

Gemäß dem Erfindungsprinzip ist eine der Anregung des Wandlers mit einer Wechselspannung bzw. Impulsfolge vorausgehende Beaufschlagung dieses Wandlers mit einer Gleichspannung verbunden mit einem sprungweisen Gleichspannungsabfall vorgesehen. Gemäß den einander nebengeordneten Lösungen dieses Prinzips kann diese an den Wandler anzulegende Gleichspannung ein Spannungsanstieg nach Art eines Sägezahnimpulses mit dann raschem Spannungsabfall sein. Der Spannungsanstieg braucht keineswegs linear zu sein; es muß nur sichergestellt sein, daß die mechanische Auslenkung des Wandlers dem elektrischen Spannungsanstieg folgen kann, so daß das Maximum der durch die Gleichspannung auftretenden mechanischen Auslenkung dem Maximum der angelegten Spannung entspricht. Die andere nebengeordnete Lösung ist, als anzulegende Gleichspannung einen Rechteckimpuls mit einer (mittleren) Impulsbreite $\tau/2$ zu verwenden. Bei beiden Lösungswegen ist ein relativ rascher Spannungsabfall innerhalb eines Zeitraumes von $\Delta t < \tau/2$ vorzusehen, wobei die Mitte dieses Zeitraumes $\Delta t$, d. h., der Zeitpunkt des raschen Spannungsabfalls (des Sägezahnimpulses der einen Lösung und des Rechteckimpulses der anderen Lösung) eine halbe Periodendauer, nämlich $\tau/2$, vor dem Zeitpunkt des Anstiegs der Amplitude der anregenden Wechselspannung bzw. der periodischen Impulsfolge liegt.

Für die erste der nebengeordneten Alternativen ist für den Sägezahnimpuls ein $U_{max} = U_0$ vorzusehen, wobei $U_0$ derjenige Spannungswert ist, bei dem der Wandler seine maximal zulässige mechanische Auslenkung (im Gleichstromfall) erreicht. Im Falle der zweiten Alternative ist die maximal mögliche Amplitude $U_{max}$ des Rechteckimpulses $= U_0/2$. Letzteres beruht darauf, daß bei der (der eigentlichen Wechselspannungsanregung erfindungsgemäß vorangehenden) Gleichstromanregung mit einem Rechteckimpuls der angegebenen Art ein 100prozentiges Überschwingen des mechanischen Wandlers, nämlich auf die gleich hohe Amplitude wie bei der ersten Alternative, eintritt.

Der Vollständigkeit halber sei erwähnt, daß natürlich auch geringere maximale Spannungen der Gleichspannung der ersten Alternative und des Rechteckimpulses der zweiten Alternative (vorzugsweise bei ebenfalls geringerer Wechselspannungsamplitude des eigentlichen Sendebetriebs) möglich sind, wenn man sich mit geringerer Schall-Sendeleistung zufrieden gibt, als sie der jeweils verwendete Wandler an sich abzugeben vermag.

Die Sendeanregung des Wandlers mit der Wechselspannung bzw. der periodischen Impulsfolge erfolgt bekanntlich auf einer der Eigenresonanzen des Wandlers, wobei hierfür im Regelfall die Eigenresonanz mit der größten Sendewirkung herangezogen wird.

Gemäß der Erfindung wird somit bei beiden Alternativen mit Hilfe der vorausgehend angelegten Gleichspannung eine mechanische Auslenkung des Wandlers erzeugt, die wenigstens angenähert gleich groß wie die Schwingungsauslenkung des Wandlers im eingeschwungenen Zustand ist. Die Gleichspannung bewirkt gegenüber der mechanischen Ruhelage (ohne anliegende Spannung) des Wandlers eine Auslenkung in einer Richtung (im Gegensatz zur Auslenkung in zwei Richtungen im Sende-Schwingungszustand). Elektrisch wirkt dieses erfindungsgemäße Anlegen einer Gleichspannung an den Wandler wie eine Aufladung der im wesentlichen elektrischen Kapazität dieses Wandlers, und zwar über den unvermeidlichen Widerstand der Spannungsquelle. Die Amplitude der (maximal zulässig) anzulegenden Gleichspannung ist bei der Alternative des Sägezahnimpulses $= U_0$ und bei der Alternative des Rechteckimpulses $= U_0/2$, wie bereits oben ausgeführt. Es gilt die Beziehung

$$U_0 = Q_m \cdot U_1,$$

worin $U_1$ das Maximum von negativem bis positivem Scheitelwert der anregenden Sende-Wechselspannung bzw. die Gesamtimpulshöhe der anregenden periodischen Sende-Impulsfolge ist. Sofern diese Größen nicht durch Berechnung (schon im voraus) ermittelt sind, lassen sich diese Werte experimentell für einen jeweiligen Wandlertyp feststellen. Die erfindungsgemäß anzulegende Gleichspannung kleiner als $U_0$ zu wählen, insbesondere der Fall der Anwendung des Rechteckimpulses mit nur $U_0/2$ anzulegender Gleichspannung, empfiehlt sich in den Fällen, in denen die elektrische Durchschlagspannung des piezoelektrischen Materials des Wandlers mit $U_0$ überschritten werden sollte. Das rasche Abklingen der erfindungsgemäß anzulegenden Gleichspannung läßt sich mit Hilfe elektrischen Kurzschlusses der Elektroden des Wandlers miteinander bewirken. Dieser Kurzschluß dauert maximal eine halbe Resonanz-

Schwingungsperiode $\tau/2$ der nachfolgenden Wechselspannungsanregung.

Die Besonderheit der erfindungsgemäßen Maßnahme des raschen Spannungsabfalls, z. B. des elektrischen Kurzschlusses des Wandlers, ist, daß dies nicht nur zu einem Rückgang der gleichspannungsmäßig bewirkten Auslenkung des Wandlers aus einem Ruhezustand, sondern zu einem mechanischen Überschwingen, und zwar mit der Frequenz der Eigenresonanz des Wandlers, führt. Die elektrische Anregungs-Wechselspannung für den Sendebetrieb wird bezüglich ihrer Phasenlage demgemäß derart angepaßt angeschaltet, daß das erwähnte mechanische Überschwingen und die folgende periodische mechanische Schwingungsanregung durch die Anregungs-Wechselspannung des Sendebetriebes wenigstens weitgehend phasenrichtig sind; das bedeutet, daß die Anregungs-Wechselspannung bzw. die periodische Impulsfolge mit wie angegebener bestimmter Phase einsetzen muß.

Weitere Erläuterungen der Erfindung gehen aus der nachfolgenden, anhand der Figuren gegebenen Beschreibung zu bevorzugten Ausführungsbeispielen hervor.

Fig. 1 und 2 zeigen entsprechend den beiden nebengeordneten, alternativen Lösungen erfindungsgemäß anzulegende Gleichspannungen;

Fig. 3 und 6 zeigen Schaltbilder von elektronischen Schaltungsvarianten zur Realisierung der Erfindung nach der ersten Variante;

Fig. 4 und 5 zeigen Schaltbilder zur zweiten Variante.

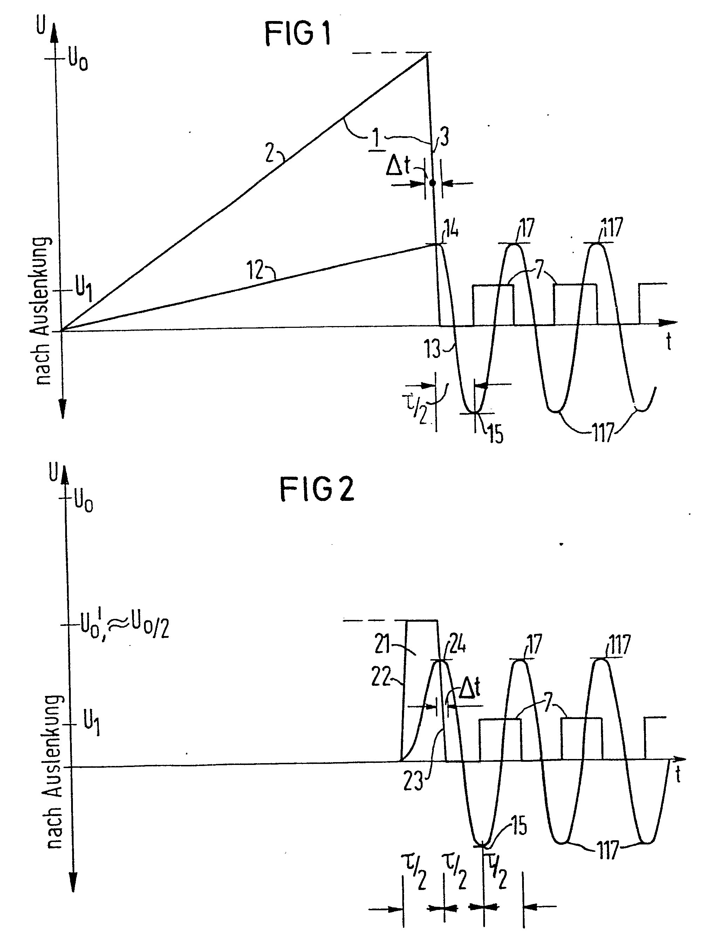

In Fig. 1 ist mit 1 ein Sägezahnimpuls dargestellt. Der Anstieg 2 des Sägezahnimpulses 1 ist vergleichsweise zu seinem erfindungswesentlich raschen Abfall 3 relativ flach und zudem ist die Form des zeitlichen Verlaufes dieses Anstiegs von untergeordneter Bedeutung (solange nur das Auslenkungsmaximum tatsächlich wenigstens weitgehend erreicht wird). Mit dem Impuls 1 wird eine praktisch vollständige mechanische Auslenkung des Wandlers erreicht. Die Kurve 12 zeigt die zum Spannungsanstieg 2 gehörige mechanische Auslenkung bis zu dem mit 14 bezeichneten Wert der maximalen Auslenkung. Der rasche Spannungsabfall 3 führt zu dem mit 13 bezeichneten Rückgang der Auslenkung mit nachfolgendem, in die Gegenrichtung gehenden Überschwingen bis zur Amplitude 15. Die Amplitude 15 wird, vom Spannungsabfall 3 abgerechnet, nach einer Zeit $\tau/2$ erreicht, worin $\tau$ die bereits erwähnte Periodendauer der Eigenresonanz des Wandlers und die der Anregungswechselspannung 7 ist. Optimal ist es, genau im Zeitpunkt des Erreichens der Amplitude 15 die Anregungswechselspannung 7 am Wandler einsetzen zu lassen. Bei der Fig. 1 ist diese Anregungswechselspannung 7 eine wie schon oben erwähnte periodische Impulsfolge. Die anliegende Impulsfolge 7 führt zu den mit den Amplituden 17 und 117 dargestellten mechanischen Schwingungen des Wandlers, nämlich mit der erfindungsgemäß erreichten Anfangsamplitude 17. Die Darstellung der Fig. 1 enthält die für die Erfindung optimalen Phasenbeziehungen von anregender Wechselspannung 7 und mechanischer Schwingungsauslenkung 17, 117 des Wandlers.

Fig. 2 zeigt einen Rechteckimpuls 21, der einen vergleichsweise zur Fig. 1 raschen Anstieg 22 hat. Erfindungsgemäß wichtig ist jedoch der ebenfalls wieder rasche Spannungsabfall 23, der ebenso wie beim Beispiel der Fig. 1 zu einem Zeitpunkt $\tau/2$ vor dem Einsetzen der Wechselspannung 7 erfolgt. Die Impulsbreite des Impulses 21 beträgt wenigstens angenähert $\tau/2$. Wie bereits oben erläutert, ist für den Rechteckimpuls 21 eine Amplitude $U'_0 \approx U_0/2$ vorzusehen, die infolge des Überschwingens den Wandler auf eine Anfangsamplitude 24 bringt, die praktisch gleich hoch der Amplitude 14 der Fig. 1 ist. Entsprechend dem Rechteckimpuls 21 ergibt sich ein zunächst weitgehend nicht sinusförmiger Anfangsanstieg 12' der mechanischen Auslenkung.

Bezüglich weiterer erläuternder Einzelheiten der Erfindung sei ausdrücklich auf die Darstellung der Fig. 1 und 2 hingewiesen.

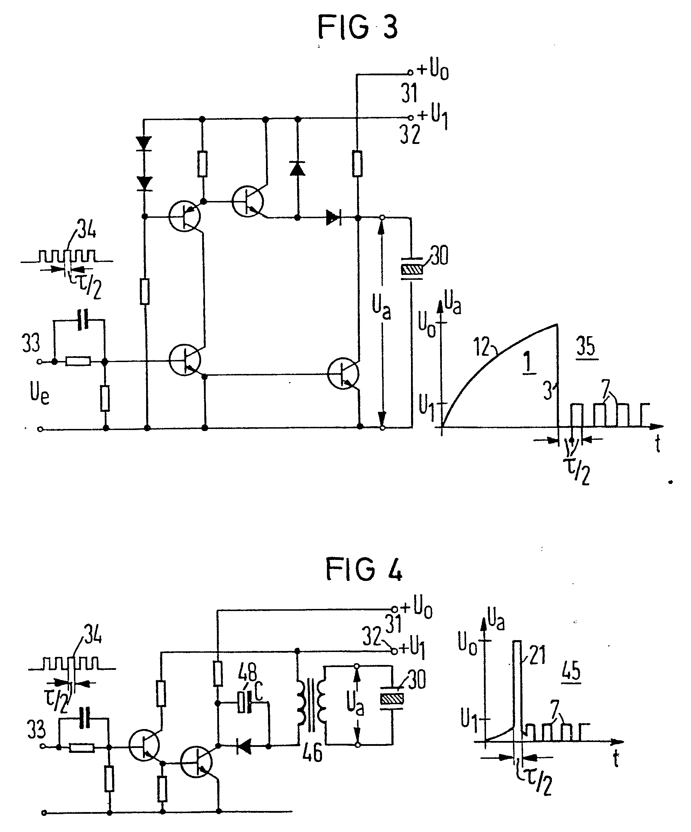

Fig. 3 zeigt eine elektronische Schaltung für einen Ultraschallwandler 30, die ohne Transformator arbeitet. Mit 31 ist der Anschluß für die Gleichspannung $U_0$ der erfindungsgemäß vorgesehenen Gleichspannung bezeichnet. Mit 32 ist der Gleichspannungsanschluß für die Betriebsspannung $U_1$ der eigentlichen Anregungsschaltung bezeichnet. Die Spannungsamplitude $U_1$ ist gleich dem Scheitelwert der obenerwähnten periodischen Anregungswechselspannung 7 an dem Wandler 30. Die an 31 anliegende Gleichspannung $U_0$ ist erfindungsgemäß sehr viel größer als die Spannungsamplitude $U_1$, vorzugsweise ist die Bemessung $U_0 = Q_m \cdot U_1$, worin $Q_m$ der oben bereits erwähnte typenbedingte mechanische Betriebsgüterwert des Wandlers 30 ist. Mit 33 ist der Eingang der Schaltung bezeichnet, an die das mit 34 deutlich gemachte Taktsignal der Anregungsfrequenz anzulegen ist.

Die übrigen Elemente der Schaltung nach Fig. 3 sind durch international bekannte Symbole für den Fachmann voll verständlich angegeben. Mit 35 ist das Spannungs-Zeit-Diagramm der am Wandler 30 anliegenden Gesamtspannung $U_a$ bezeichnet, wobei sich ein Betrieb nach Fig. 1 ergibt.

Mit Fig. 4 wird eine zweite Anregungsschaltung wiedergegeben, die einen Transformator 46 für den Wandler 30 hat. Statt der Wandlerkapazität wird hier ein Hilfskondensator 48 auf die um den Wert $\frac{1}{2} Q_m$ erhöhte Betriebsspannung $U'_0$ aufgeladen. Bezüglich der weiteren Einzelheiten der Fig. 4 sei auf die Beschreibung zur Fig. 3 verwiesen. Mit 45 ist in Fig. 4 (vergleichsweise zu 35) ein Spannungs-Zeit-Diagramm für die am Wandler 30 anliegende Spannung angegeben. Bei Betrieb der Schaltung nach Fig. 4 wird entsprechend der Variante gemäß Fig. 2 ein Gleichspannungs-Rechteckimpuls 21 erzeugt, der von dem Transformator 46 an den Wandler 30 übertragen wird.

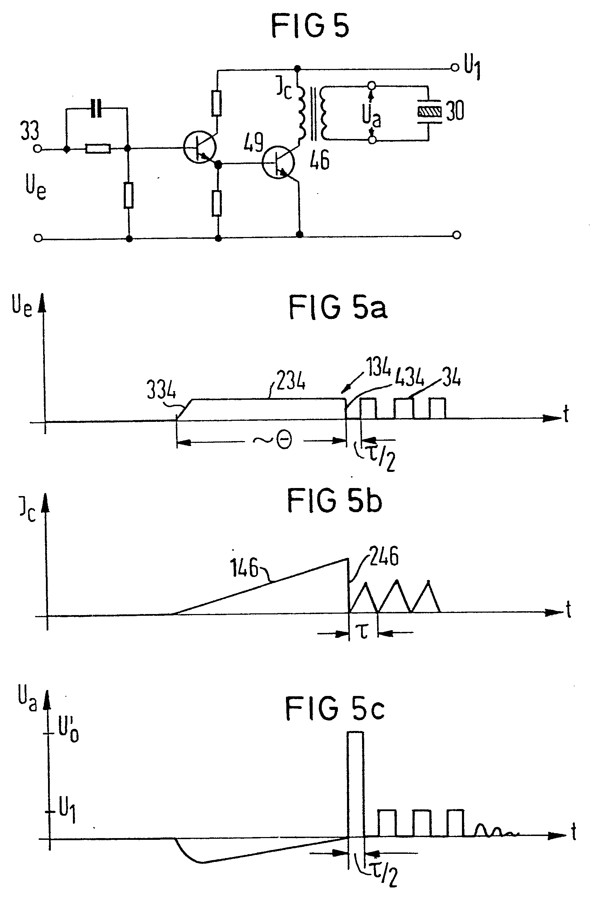

Fig. 5 zeigt eine weitere Anregungsschaltung zur ersten Variante gemäß Fig. 1. Die gegenüber der Betriebsspannung $U_1$ um den Faktor $\frac{1}{2} Q_m$ größere Spannung $U'_0$ für den erfindungsgemäß vorgesehenen Gleichspannungsimpuls wird hier aus der in der Induktivität des Übertragers 46 gespeicherten magnetischen Energie gewonnen. Dazu wird dieser Übertrager 46 bezüglich seiner Induktivität so bemessen, daß sein Magnetkern bei Anliegen der Betriebsspannung $U_1$ nach einer Zeitdauer von $\Theta = \frac{1}{2} Q_m \cdot \tau$ noch nicht oder gerade noch nicht in die Sättigung kommt. Wird der Übertrager 46 mittels des als Schalter wirkenden Transistors 49 von der Betriebsspannung getrennt, fließt der den Scheitelwert des Betriebsstroms um den Faktor $Q_m$ übertreffende Stromstoß in den Wandler 30 und bewirkt damit die gemäß der Erfindung vorgesehene, der betriebsmäßigen Wechselspannungsanregung vorausgehende Gleichspannungsanregung $U'_0$ mit dem Ergebnis sofortiger voller Amplitude 24 der mechanischen Auslenkung. Diese Auslenkung geht wie bei den vorangehenden Varianten dann in die Resonanzschwingungsauslenkung dieser vollen Schwingungsamplitude 17, 117 über.

Zur Schaltung nach Fig. 5 zeigt 5a die bei dieser Schaltung an den Eingang 33 anzulegende Steuerspannung 134, die aus einem Rechteckimpulsanteil 34 wie bei den Schaltungen der Fig. 3 und 4 und aus einem weiteren Anteil 234, 334 besteht. Nach einem vergleichsweise zum Rechtecksignal 34 langsamen Anstieg 334 folgt ein Impulsanteil 234 mit konstanter Amplitude, der im Zeitpunkt des gewünschten Spannungsabfalls 3 mit einem entsprechenden Abfall 434 der Steuerspannung in den bereits erwähnten Impulsanteil 34 übergeht.

Fig. 5b zeigt zu Fig. 5a auf der Ordinate aufgetragen den Strom $I_c$ durch den Transistor 49 und durch die Primärspule des Übertragers 46. Dem Anteil 234 und 334 der Steuerspannung nach Fig. 5a entspricht ein Vorsättigungsanstieg 146 des Magnetkerns des Übertragers 46. Mit 246 ist ein rascher Abfall des Stroms $I_c$ wiedergegeben, der dann in eine Dreiecks-Stromfolge mit der Periode $\tau$ übergeht.

Fig. 5c zeigt zu den Fig. 5a und 5b die über die Zeitdauer hinweg am Wandler 30 anliegende elektrische Spannung mit dem erfindungsgemäßen Rechteckimpuls 57 als erfindungsgemäß vorübergehend anzulegender Gleichspannungsimpuls 21 und die der Wechselspannungsanregung 7 entsprechende Impulsfolge 55.

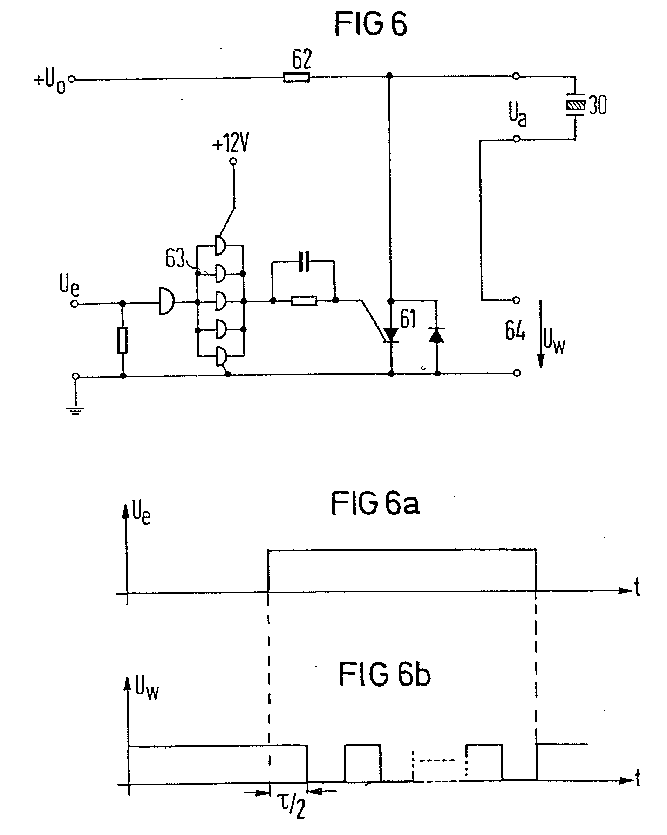

Fig. 6 zeigt noch eine Schaltung zur ersten Variante mit langsam ansteigender Gleichspannung 1. Mit 61 ist ein Thyristor bezeichnet, dessen steuerbares Kurzschlußverhalten den raschen Spannungsabfall 3 erzeugt. Bei anliegender Spannung $U_0$ wird die elektrische Kapazität des Wandlers 30 über den Vorschaltwiederstand 62 auf die Gleichspannung aufgeladen. Im Augenblick des Eingangs eines Spannungssprungs $U_e$ am Eingang 65 — siehe auch das Diagramm 6a — erfolgt über die Gatterschaltung 63 (z. B. BBC Typ C5-12902). Es erfolgt der bereits erwähnte Spannungsabfall 3 um den Betrag $U_0$.

An den Eingang 64 der Schaltung wird eine wie aus dem Diagramm 6b ersichtliche zeitabhängige Spannung $U_w$ angelegt. Während des Zeitpunktes des vorangehend angegebenen Spannungsabfalls hat diese Spannung $U_w$ den wie angegebenen Wert $U_1$ (wie er oben bereits erörtert ist). Zum Zeitpunkt $\tau/2$ nach dem Spannungsabfall setzt die periodische Impulsfolge 7' ein, wie sie insbesondere aus Fig. 6b zu ersehen ist. Die Impulshöhen betragen wieder $U_1$; vergleichsweise zu den vorangehenden Beispielen sind dies hier lediglich negative Impulse.

Die Darstellung der Fig. 6b gibt auch die optimale Phasenbeziehung zwischen der Eingangsspannung $U_e$ (Fig. 6a) und der Impulsfolge $U_w$, d. h. zwischen dem sprunghaften Spannungsabfall 3 der erfindungsgemäßen Gleichspannungsanregung 1 und der Anregungswechselspannung 7', wieder.

## Patentansprüche

1. Verfahren für einen piezoelektrischen Schallwandler zur impulsweisen, mit einer elektrischen Wechselspannung mit einer Frequenz, die gleich der Eigenresonanz des Wandlers ist, durchzuführenden Sendeanregung mit definierbarem Impulszeitpunkt, gekennzeichnet dadurch, daß zum Erreichen einer mechanischen Anfangsschwingung (17) des Wandlers, die bereits im wesentlichen gleich der vollen Amplitude (117) des eingeschwungenen Zustandes ist, das vorübergehende einmalige Anlegen einer Gleichspannung (1) an den Schallwandler (30) vorgesehen ist, und zwar mit einem nach Spannungsanstieg (2) erfolgendem raschen Spannungsabfall (3) dieser Gleichspannung (1) am Wandler (30), wobei der Spannungsabfall (3) in einem Zeitraum $\Delta t < \tau/2$ erfolgt, worin $\tau$ die Periodendauer der anregenden Wechselspannung (7) ist und der Beginn des Spannungsabfalls (3; 23) wenigstens angenähert zum Zeitpunkt einer halben Periodendauer $\tau/2$ vor dem Zeitpunkt des Anstiegs der Amplitude der anregenden Wechselspannung (7) liegt, und mit wenigstens angenähert einer solchen Amplitude ($U_0$) der Gleichspannung (1) am Wandler (30), mit der dieser Wandler (30) eine Amplitude (14) der mechanischen Auslenkung erhält, die gleich der Schwingungsamplitude (117) des eingeschwungenen Wechselspannungs-Anregungszustandes ist (Fig. 1).

2. Verfahren für einen piezoelektrischen Schallwandler zur impulsweisen, mit einer elektrischen Wechselspannung mit einer Frequenz, die gleich der Eigenresonanz des Wandlers ist, durchzuführenden Sendeanregung mit definierbarem Impulszeitpunkt, gekennzeichnet dadurch, daß zum Erreichen einer mechanischen Anfangsschwingung (17) des Wandlers, die bereits im wesentlichen gleich der vollen Amplitude (117) des eingeschwungenen Zustandes ist, das vorübergehende einmalige Anlegen eines Gleichspannungsimpulses (21) an den Schallwandler (30) vorgesehen ist, und zwar mit einem raschen Spannungsanstieg (22) und einem raschen Spannungsabfall (23) am Wandler (30), wobei sowohl der Spannungsanstieg (22) als auch der Spannungsabfall (23) jeweils in einem Zeitraum $\Delta t < \tau/2$ erfolgen, worin $\tau$ die Periodendauer der anregenden Wechselspannung (7) ist, und der Beginn des Spannungsabfalls wenigstens angenähert zum Zeitpunkt einer halben Periodendauer ($\tau/2$) vor dem Zeitpunkt des Anstiegs der Amplitude der anregenden Wechselspannung (7) liegt und die Impulsbreite wenigstens angenähert $\tau/2$ beträgt, und mit wenigstens angenähert einer solchen Amplitude ($U'_0$) des Gleichspannungsimpulses (21) am Wandler (30), mit der dieser Wandler (30) eine Amplitude (24) der mechanischen Auslenkung erhält, die gleich der Schwingungsamplitude (117) des eingeschwungenen Wechselspannungs-Anregungszustandes ist (Fig. 2).

3. Verfahren nach Anspruch 1, gekennzeichnet dadurch, daß die vorübergehend einmalig anzulegende Gleichspannung ein Sägezahnimpuls ist, dessen Maximalspannungswert wenigstens angenähert $= U_0$ ist und dessen Anstiegsdauer vielfach länger als die Periodendauer ist.

4. Verfahren nach Anspruch 1 oder 3, gekennzeichnet dadurch, daß die Amplitude der Gleichspannung (1) wenigstens 70% der Amplitude $U_0$ beträgt, mit der die vorgesehene Auslenkung (14) des eingeschwungenen Zustandes (117) erreicht wird.

5. Verfahren nach Anspruch 1, 3 oder 4, gekennzeichnet dadurch, daß die Dauer ($\Theta$) des Anstiegs (2) der Gleichspannung (1) etwa $\Theta = Q_m \cdot \tau$ beträgt, worin $Q_m$ der Wert der mechanischen Güte des Wandlers (30) und $\tau$ dessen Periodendauer der Eigenresonanz und der vorgesehenen Wechselspannungs-(7)Anregung ist.

6. Verfahren nach Anspruch 2, gekennzeichnet dadurch, daß die Amplitude des Gleichspannungsimpulses (21) wenigstens 70% der Amplitude $U'_0$ beträgt, mit der die vorgesehene Auslenkung des eingeschwungenen Zustandes erreicht wird.

7. Schaltung zur Durchführung eines Verfahrens nach Anspruch 2 und mit einer maximalen Betriebsspannung $U_1$, die gleich der Amplitude der vorgesehenen Wechselspannungsanregung ist, gekennzeichnet durch einen Übertrager (46), an dessen Sekundärwicklung der Wandler (30) angeschlossen ist und dessen Primärwicklung in Reihe mit einem elektronischen Schalter (49) an der Betriebsspannung $U_1$ liegt, wobei für den Steuereingang des Schalters (49) ein Signal (134) vorgesehen ist, bei dem dem Impuls-Steuersignal (34) der Wechselspannungsanre-

gung (7) mit der Periodendauer $\tau$ ein Langzeitimpuls (234), mit etwa gleicher Amplitude wie der des Steuersignals (34), mit einer Impulsdauer $\Theta = Q_m \cdot \tau$ vorangeht, wobei der Impulsanstieg (334) vergleichsweise zum Impulssteuersignal (34) flach ist und worin $Q_m$ die mechanische Güte des Wandlers (30) ist.

## Claims

1. A method of excitation of a piezoelectric sound transducer that is to be used for pulse transmission of defined pulse duration when driven by an a.c. voltage having a frequency equal to the natural resonance of the transducer, characterised in that a mechanical starting oscillation (17) of the transducer fundamentally equal to the full amplitude (117) of the built-up state is achieved by a temporary, single connection of a d.c. voltage (1) to the sound transducer (30), to give a rapid voltage drop (3) of this d.c. voltage (1) across the transducer (30) following a rise in voltage (2), the voltage drop (3) occurring in a period of time $\Delta t < \tau/2$, where $\tau$ is the period of the exciting a.c. voltage (7), and the beginning of the voltage drop (3; 23) occurring at least approximately at the time of a half cycle $\tau/2$ preceding the time of the rise in the amplitude of the exciting a.c. voltage (7), and where the amplitude ($U_0$) of the d.c. voltage (1) across the transducer (30) is at least approximately such that this transducer (30) reaches an amplitude (14) of mechanical deflection which is equal to the built-up oscillation amplitude (117) of the stage when driven by the a.c. voltage excitation (Fig. 1).

2. A method of excitation of a piezoelectric sound transducer that is to be used for pulse transmission of defined pulse duration when driven by an a.c. voltage having a frequency equal to the natural resonance of the transducer, characterised in that a mechanical starting oscillation (17) of the transducer fundamentally equal to the full amplitude (117) of the built-up state is achieved by a temporary, single connection of a d.c. voltage pulse (21) to the sound transducer (30), with a rapid voltage rise (22) and a rapid voltage drop (23) across the transducer (30), where both the voltage rise (22) and the voltage drop (23) each take place in an interval of time $\Delta t < \tau/2$, where $\tau$ is the period of the exciting a.c. voltage (7), and the beginning of the voltage drop occurs at least approximately at the time of half cycle ($\tau/2$) preceding the time of the rise in the amplitude of the exciting a.c. voltage (7), and the pulse width amounts to at least approximately $\tau/2$, and where the amplitude ($U'_0$) of the d.c. voltage pulse (21) across the transducer (30) is at least approximately such that this transducer (30) reaches an amplitude (24) of mechanical deflection which is equal to the oscillation amplitude (117) of the built-up alternating voltage excitation state (Fig. 2).

3. A method as claimed in Claim 1, characterised in that the d.c. voltage to be tempo temporarily connected on one single occasion gives a saw tooth pulse whose maximum voltage value is at least approximately $U_0$ and whose rise time is many times longer than the period of the a.c. voltage.

4. A method as claimd in Claim 1 or Claim 3, characterised in that the amplitude of the d.c. voltage (1) amounts to at least 70% of the amplitude $U_0$ with which the provided deflection (14) of the built-up state (117) is acieved.

5. A method as claimed in Claim 1, 3 or 4, characterised in that the duration ($\Theta$) of the rise (2) in the d.c. voltage (1) amounts to approximately $\Theta = Q_m \cdot \tau$, where $Q_m$ is the value of the mechanical efficiency of the transducer (30) and $\tau$ is the period of the natural resonance and of the a.c. voltage (7) excitation.

6. A method as claimed in Claim 2, characterised in that the amplitude of the d.c. voltage pulse (21) amounts to at least 70% of the amplitude $U'_0$ with which the provided deflection of the built-up state is reached.

7. A circuit for the implementation of the method as claimed in Claim 2, with a maximum operating voltage $U_1$ which is equal to the amplitude of the provided a.c. voltage excitation, characterised by a transformer (46) whose secondary winding is connected to the transducer (30) and whose primary winding is connected to the operating voltage $U_1$ in series with an electronic switch (49), where the control input of the switch (49) is provided with a signal (134) with which the pulse control signal (34) of the a.c. voltage excitation (7) having the period $\tau$ is preceded by a long-term pulse (234) which possesses approximately the same amplitude as the control signal (34) and which has a pulse duration $\Theta = Q_m \cdot \tau$ where the pulse rise (334) is flat in comparison to the pulse control signal (34) and where $Q_m$ represents the mechanical efficiency of the transducer (30).

## Revendications

1. Procédé relatif à un transducteur acoustique piézoélectrique, pour l'excitation impulsionnelle d'émission devant être effectuée avec une tension alternative électrique possédant une fréquence égale à la fréquence de résonance propre du transducteur, à un instant d'impulsion pouvant être défini, caractérisé par le fait que pour obtenir une oscillation mécanique initiale (17) du transducteuer, qui est déjà sensiblement égale à l'amplitude totale (117) de l'état permanent, il est prévu l'application transitoire unique d'une tension continue (1) au transducteuer acoustique (30), et ce avec une chute rapide (3) de cette tension continue (1) dans le transducteur (30) intervenant avec une croissance (2) de cette tension, la chute (3) de la tension s'effectuant dans un intervalle de temps $\Delta t < \tau/2$ dans lequel $\tau$ est la durée de la période de la tension alternative (7) excitatrice, tandis que le début de la chute de tension (3; 23) se situe au moins approximativement à l'instant apparaissant une demi-période $\tau/2$ avant l'instant de la corissance de l'amplitude de la tension alternative excitatrice (7), et avec au moins approximativement une amplitude ($U_0$) de la tension continue (1) dans le transducteur (30), pour laquelle la déviation mécanique de ce transducteur (30) prend une amplitude (14) qui est égale à l'amplitude d'oscillation (117) de l'état permanent d'excitation par la tension alternative (figure 1).

2. Procédé relatif à un transducteuer acoustique piézoélectrique, pour l'excitation impulsionnelle d'émission devant être effectuée avec une tension alternative électrique possédant une fréquence égale à la fréquence de résonance propre du transducteuer, à un instant d'impulsion pouvant être défini, caractérisé par le fait que pour obtenir une oscillation mécanique initiale (17) du transducteuer, qui est déjà sensiblement identique à l'amplitude totale (117) de l'état permanent, il est prévu l'application transitoire unique d'une impulsion de tension continue (21) au transducteuer acoustique (30), et ce avec une croissance rapide (22) de la tension et une chute rapide (23) de la tension dans le transducteuer (30), aussi bien la croissance (22) que la chute (23) de la tension s'effectuant respectivement en un intervalle de temps $\Delta t < \tau/2$, dans lequel $\tau$ est la durée de la période de la tension alternative excitatrice (17), tandis que le début de la chute de tension se situe aus moins approximativement à l'instant situé une demi-période ($\tau/2$) avant l'instant de la croissance de l'amplitude de la tension alternative excitatrice (7) et que la largeur de l'impulsion est égale au moins approximativement à $\tau/2$ et avec au moins approximativement une amplitude ($U'_0$) de l'impulsion de tension continue (21) dans le transducteur (30), pour laquelle la déviation mécanique de ce transducteur (30) prend une amplitude (24) qui est égale à l'amplitude d'oscillation (117) de l'état permanent d'excitation par la tension alternative (figure 2).

3. Procédé suivant la revendication 1, caractérisé par le fait que la tension continue devant être appliquée une fois de façon transitoire est une impulsion en dent de scie dont la valeur de tension maximale est égale au moins approximativement à $U_0$ et dont la durée de la croissance est un multiple de la durée de la période.

4. Procédé suivant la revendication 1 ou 3, caractérisé par le fait que l'amplitude de la tension continue (1) est égale au moins à 70% de l'amplitude $U_0$, avec laquelle la déviation prévue (14) de l'état permanent (117) est atteinte.

5. Procédé suivant la revendication 1, 3 ou 4, caractérisé par le fait que la durée ($\Theta$) de la croissance (2) de la tension continue (1) est égale approximativement à $\Theta = Q_m \cdot \tau$, $Q_m$ étant la valeur du facteur de qualité du transducteur (30) et $\tau$ étant la durée de la période de la résonance propre de ce dernier et de l'excitation prévue par la tension alternative (7).

6. Procédé suivant la revendication 2, caractérisé par le fait que l'amplitude de l'impulsion de tension continue (21) est égale au moins à 70% de l'amplitude $U'_0$, avec laquelle la déviation prévue de l'état permanent est atteinte.

7. Circuit pour la mise en œuvre d'un procédé suivant la revendication 2 et avec une tension maximale de service ($U_1$) qui est égale à l'amplitude de l'excitation prévue par la tension alternative, caractérisé par un transformateur (46), à l'enroulement secondaire duquel est raccordé le transducteur (30) et dont l'enroulement primaire, en série avec un commutateur électronique (49), est placé à la tension de service $U_1$, tandis qu'il est prévu pour une entrée de commande du commutateur (49) un signal (134) dans le cas duquel le signal de commande impulsionnel (34) de l'excitation (7) par la tension alternative, possédant une période de durée $\tau$, est précédé par une impulsion de longue durée (234) possédant approximativement la même amplitude que celle du signal de commande (34) et ayant une durée $\Theta = Q_m \cdot \tau$, la corissance (334) de l'impulsion étant plate comparativement au signal de commande impulsionnel (34), $Q_m$ étant le facteur de qulité mécanique de transducteur (30).

FIG 1

FIG 2

## FIG 3

## FIG 4

# FIG 5

# FIG 5a

# FIG 5b

# FIG 5c

# FIG 6

# FIG 6a

# FIG 6b